Europäisches Patentamt

European Patent Office

Office européen des brevets

(11) Veröffentlichungsnummer: **0 354 325**
**A2**

# (12) EUROPÄISCHE PATENTANMELDUNG

(21) Anmeldenummer: 89111219.5

(22) Anmeldetag: 20.06.89

(51) Int. Cl.⁴: **B62D 25/00 , B62D 47/00 , B60P 3/42**

(30) Priorität: **12.08.88 DE 8810287 U**

(43) Veröffentlichungstag der Anmeldung:
**14.02.90 Patentblatt 90/07**

(84) Benannte Vertragsstaaten:
**ES FR GB IT NL**

(71) Anmelder: **Hoffmann, Wolfgang**
**Lindenweg 4**
**D-8928 Hohenfurch(DE)**

(72) Erfinder: **Hoffmann, Wolfgang**
**Lindenweg 4**
**D-8928 Hohenfurch(DE)**

(74) Vertreter: **Kohlmann, Karl Friedrich, Dipl.-Ing.**
**et al**
**Hoffmann, Eitle & Partner Arabellastrasse 4**
**(Sternhaus)**
**D-8000 München 81(DE)**

(54) **Bausatz zum Umbau eines Kraftfahrzeuges mit Stahldach in ein Cabriolet.**

(57) Um einen einfach aufgebauten Bausatz zu schaffen, mit dem auch von fachlich nicht versierten Hobby-Mechanikern auf einfache Weise ohne Schweiß- oder andere komplizierte Arbeiten ein Umbau eines zumindest B-Säulen sowie tragende Seitenteile im Bereich der hinteren Radkästen aufweisenden Kraftfahrzeuges mit Stahldach in ein Cabriolet realisiert werden kann, wird erfindungsgemäß ein zumindest die B-Säulen (6) und die tragenden Seitenteile miteinander verbindender, im wesentlichen horizontaler Rahmen (1) vorgesehen, der Anschlußelemente zum Befestigen des Rahmen an den B-Säulen und den tragenden Seitenteilen umfaßt.

Fig. 1

## Bausatz zum Umbau eines Kraftfahrzeuges mit Stahldach in ein Cabriolet

Die vorliegende Erfindung betrifft einen Bausatz zum Umbau eines zumindest B-Säulen sowie tragende Seitenteile im Bereich der hinteren Radkästen aufweisenden Kraftfahrzeuges mit Stahldach in ein Cabriolet.

Umbausätze für Kraftfahrzeuge der oben beschriebenen Art sind in den verschiedensten Ausführungsformen seit langem bekannt. Sie bestehen meist aus einer Vielzahl von vorgefertigten Einzelteilen, deren Montage jedoch in den meisten Fällen auch unter Zuhilfenahme einer detaillierten Montageanleitung ohne eine gewisse Fachkenntnis nicht möglich ist. Auch erfordert die Montage in vielen Fällen Schweißarbeiten, die auch für versierte Hobby-Mechaniker ohne fachliche Hilfe nicht durchgeführt werden können.

Aufgabe der vorliegenden Erfindung ist es, einen vollkommen neuartigen, einfach aufgebauten Bausatz zu schaffen, mit dem auch von fachlich nicht versierten Hobby-Mechanikern auf einfache Weise ohne Schweiß- oder andere komplizierte Arbeiten ein Umbau eines Kraftfahrzeuges mit Stahlbach in ein Cabriolet realisiert werden kann.

Diese Aufgabe wird erfindungsgemäß dadurch gelöst, daß der Bausatz einen zumindest die B-Säulen und die tragenden Seitenteile miteinander verbindenden, im wesentlichen horizontalen Rahmen, sowie Anschlußelemente zum Befestigen des Rahmens an den B-Säulen und den tragenden Seitenteilen umfaßt.

Im Gegensatz zu den meisten bekannten Umbausätzen stellt das Kernstück des erfindungsgemäßen Bausatzes der im wesentlichen horizontale Rahmen dar, der zumindest die B-Säulen und die tragenden Seitenteile im Bereich der hinteren Radkästen miteinander verbindet und damit die statische Funktion des zu diesem Zweck abgetrennten Stahldaches des Kraftfahrzeuges übernimmt. Um diese statische Funktion übernehmen zu können, ist es erforderlich, daß der Rahmen an den B-Säulen und den tragenden Seitenteilen befestigt wird. Hierzu enthält der Bausatz Anschlußelemente, die grundsätzlich in der verschiedensten Weise ausgebildet sein können. Im Falle eines Kraftfahrzeuges mit hohlen B-Säulen und hohlen C-Säulen im Bereich der hinteren Seitenteile ist es vorteilhaft, daß diese Anschlußelemente als in die hohlen B- und C-Säulen einschiebbare Steckzapfen ausgebildet sind. Diese Steckzapfen können gegebenenfalls mit Schrauben in den B- und C-Säulen fixiert werden.

Der das Kernstück des erfindungsgemäßen Bausatzes bildende Rahmen besteht gemäß einem bevorzugten Ausführungsbeispiel aus zwei Längsrahmenteilen, die über zumindest ein Querrahmenteil miteinander verbunden sind. Ein derartiger Rahmenaufbau ist einfach herzustellen, problemlos zu montieren und in statischer Hinsicht einwandfrei. Wesentlich ist lediglich, daß die Längsrahmenteile und das Querrahmenteil biegesteif miteinander verbunden sind.

Für den Fall, daß der Rahmen als vorgefertigtes Element des Bausatzes ausgebildet sein soll, ist es vorteilhaft, die Längsrahmenteile und das Querrahmenteil miteinander zu verschweißen. Zur Verkleinerung des Transportvolumens des Rahmens können die Längsrahmenteile und das Querrahmenteil auch biegesteif miteinander verschraubt sein.

Je nach umzubauendem Kraftfahrzeugtyp können die Längsrahmenteile und das Querrahmenteil in verschiedenster Weise ausgebildet sein. Bei einer besonders einfachen Ausführungsform bestehen die Längsrahmenteile aus geraden Stäben und das Querrahmenteil aus einem gebogenen Stab. Für den Fall, daß es sich um eine vier-türige Kraftfahrzeugversion handelt und die hinteren Türen vollständig oder teilweise beibehalten werden sollen, ist es vorteilhaft, die Längsrahmenteile im Bereich ihrer vorderen Enden in einer vertikalen Ebene etwa U-förmig, zur Ausbildung einer Einstiegsöffnung nach unten auszubuchten.

Der das Kernstück bildende Rahmen einschließlich der Anschlußelemente stellt den minimalen Umfang des erfindungsgemäßen Bausatzes dar. Gemäß einer vorteilhaften Weiterbildung kann der erfindungsgemäße Bausatz jedoch zusätzlich ein Heckteil aus glasfaserverstärktem Kunststoff aufweisen, das mit dem Rahmen verbunden ist. Vorteilhaft ist es, wenn der Rahmen in das Heckteil einlaminiert ist.

Gemäß eines weiteren bevorzugten Ausführungsbeispiels kann der Bausatz zusätzlich zu dem Heckteil aus glasfaserverstärktem Kunststoff noch ein Faltdach aufweisen. Bei diesem bevorzugten Ausführungsbeispiel ist das Faltdach am Heckteil befestigt.

Bestandteil des erfindungsgemäßen Bausatzes sind darüber hinaus noch Blechschrauben und weitere Kleinteile, die jedoch als Normteile nicht weiter aufgeführt werden.

Im folgenden sind zur weiteren Erläuterung und zum besseren Verständnis zwei Ausführungsbeispiele der Erfindung unter Bezugnahme auf die beigefügten Zeichnungen näher beschrieben.

Fig. 1 zeigt in einer perspektivischen Ansicht einen Teil einer vorbereiteten Kraftfahrzeugchassis mit einem erfindungsgemäßen Rahmen, kurz vor der Montage,

Fig. 5,6,7 zeigen den erfindungsgemäßen Rahmen gemäß Fig. 1 in einer Draufsicht, einer Seitenansicht und in einer Vorderansicht,

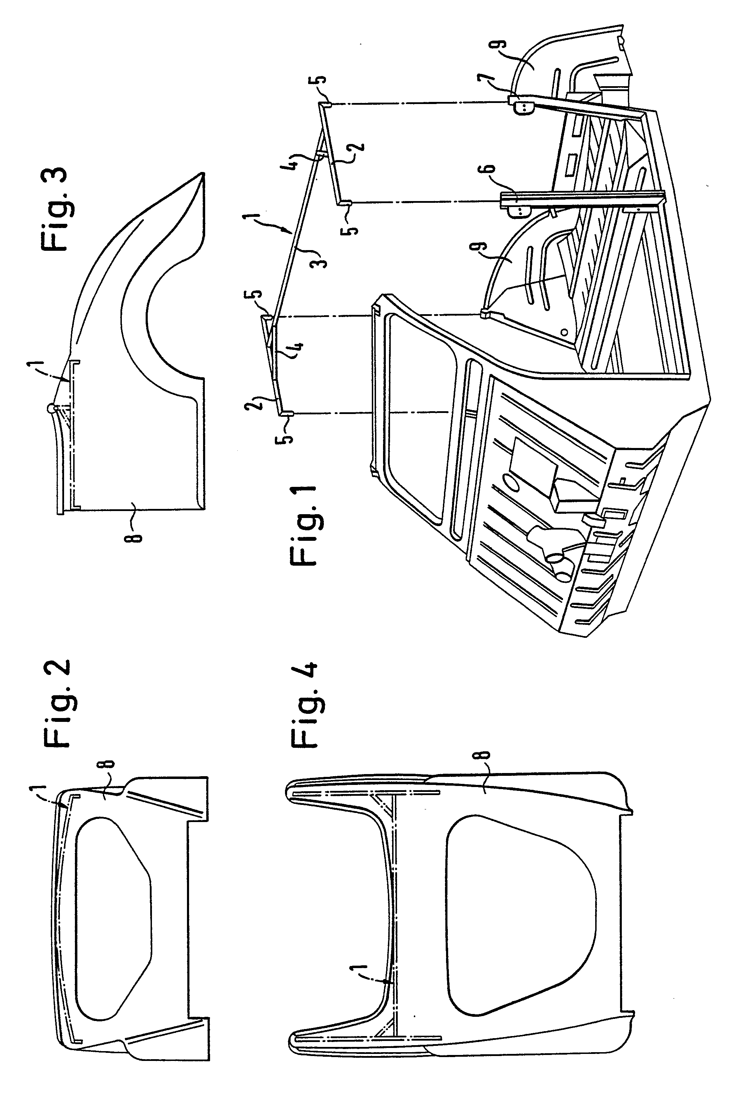

Fig. 2,3,4 zeigen in einer Rückansicht, einer Seitenansicht und in einer Draufsicht ein bevorzugtes Ausführungsbeispiel eines erfindungsgemäßen Bausatzes, bestehend aus dem erfindungsgemäßen Rahmen sowie einem Heckteil aus glasfaserverstärktem Kunststoff.

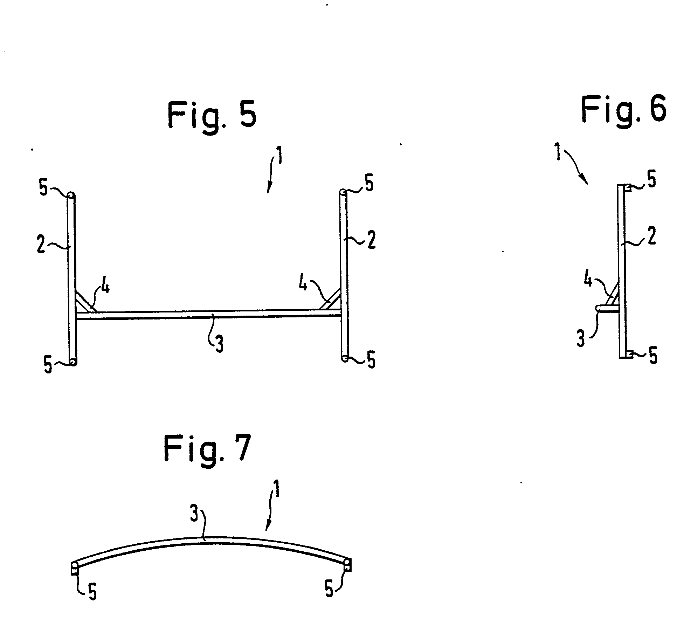

Wie aus den Fig. 1 und 5 bis 7 hervorgeht, besteht der das Kernstück des erfindungsgemäßen Bausatzes bildende Rahmen 1 aus zwei im wesentlichen parallel zueinander verlaufenden Längsrahmenteilen 2 sowie einem diese verbindenden Querrahmenteil 3.

Die Längsrahmenteile 2 und das Querrahmenteil 3 sind biegesteif miteinander verbunden.

Im vorliegenden Ausführungsbeispiel stellt der Rahmen 1 ein vorgefertigtes Element des Bausatzes dar. Aus diesem Grund sind die Längsrahmenteile 2 und das Querrahmenteil 3 durch Schweißen miteinander verbunden. Zur Aussteifung sind zu diesem Zweck im Bereich der Verbindungsstellen Aussteifungsstäbe 4 eingeschweißt.

Wie aus den Fig. 1 sowie 5, 7 zu ersehen ist, sind die Längsrahmenteile 2 im Bereich ihrer Enden mit vertikal nach unten weisenden Steckzapfen 5 ausgestattet. Diese Steckzapfen sind derart bemessen, daß sie in die hohlen B-Säulen 6 und die hohlen C-Säulen 7 der in Fig. 1 dargestellten Kraftfahrzeugchassis eingeschoben werden können.

Wie bei derartigen Bausätzen üblich, wurde die Kraftfahrzeug-Chassis vor dem Einschieben der Steckzapfen 5 des Rahmens 1 entsprechend vorbereitet. Zu diesem Zweck wurden lediglich der vordere Dachholm im Bereich des Rahmens für die Windschutzscheibe, die B-Säulen und die C-Säulen sowie weitere Elemente der Kraftfahrzeugchassis durch Abschneiden mittels einer herkömmlichen Stahlsäge auf die für den Umbau erforderlichen Abmessungen gebracht. Diese Maßnahmen sind bekannt und nicht Gegenstand des erfindungsgemäßen Umbausatzes.

Wie in Fig. 1 mit strichpunktierten Linien und Pfeilen angedeutet, wird nach der Vorbereitung der Kraftfahrzeugchassis der Rahmen 1 mit den Steckzapfen 5 in die hohlen B- und C-Säulen eingeschoben und in diesen durch geeignete Schrauben oder dgl. fixiert. Auf diese Weise ist der durch das Abtrennen des Daches verlorengegangene Verbund zwischen den B- und den C-Säulen wieder hergestellt und die für einen ordnungsgemäßen Betrieb erforderliche statische Festigkeit und Steifigkeit gegeben.

Bei dem in den Fig. 2 bis 4 dargestellten Ausführungsbeispiel umfaßt der erfindungsgemäße Bausatz nicht nur den das Kernelement der Erfindung bildenden Rahmen 1 mit Anschlußelementen in Form von Steckzapfen 5, sondern darüber hinaus auch ein Heckteil 8 aus glasfaserverstärktem Kunststoff. Der Rahmen 1 ist dabei mit strichpunktierten Linien angedeutet. Der Rahmen 1 ist in das Heckteil 8 einlaminiert.

Bei einem Bausatz der in den Fig. 2 bis 4 beschriebenen Art müssen von der Kraftfahrzeugchassis - wie in Fig. 1 ebenfalls zu erkennen - die Kotflügel des Kraftfahrzeuges ebenfalls entfernt werden, so daß lediglich noch die Radkästen 9 vorhanden sind.

Das Heckteil ist dabei derart ausgestaltet, daß es dem jeweiligen Kraftfahrzeugtyp entsprechend an die Radkästen 9 angepaßt ist.

Nach dem Aufsetzen des Heckteiles 8 und des Rahmens 1 auf die entsprechend vorbereitete Kraftfahrzeug-Chassis ist es lediglich erforderlich, das Heckteil 8 mit entsprechenden Schrauben an der Chassis zu befestigen. Versuche haben gezeigt, daß hierzu herkömmliche Blechschrauben ausreichen. Um eine gute Abdichtung zu gewährleisten, ist es vorteilhaft, zwischen die Radkästen 9 und das Heckteil 8 sowie im Bereich der B- und C-Säulen mit dauerelastischem Dichtmaterial eine Art Dichtschnur aufzuspritzen. Im Anschluß daran sind lediglich die übrigen, von der Straßenverkehrsordnung vorgeschriebenen Elemente, wie beispielsweise die Rücklicht- und ggfs. Nummernschildträger sowie die Gurte und dergl. wieder an- bzw. einzubauen.

## Ansprüche

1. Bausatz zum Umbau eines zumindest B-Säulen sowie tragende Seitenteile im Bereich der hinteren Radkästen aufweisenden Kraftfahrzeuges mit Stahldach in ein Cabriolet, dadurch gekennzeichnet, daß der Bausatz einen zumindest die B-Säulen (6) und die tragenden Seitenteile miteinander verbindenden, im wesentlichen horizontalen Rahmen (1), sowie Anschlußelemente zum Befestigen des Rahmens an den B-Säulen und den tragenden Seitenteilen umfaßt.

2. Bausatz nach Anspruch 1, dadurch gekennzeichnet, daß der Rahmen (1) aus zwei Längsrahmenteilen (2) besteht, die über zumindest ein Querrahmenteil (3) miteinander verbunden sind.

3. Bausatz nach Anspruch 2, dadurch gekennzeichnet, daß die Längsrahmenteile (2) als gerade Stäbe und das Querrahmenteil (3) als gebogener Stab ausgebildet sind.

4. Bausatz nach Anspruch 2, dadurch gekennzeichnet, daß die Längsrahmenteile (2) im Bereich ihrer vorderen Enden in einer vertikalen Ebene U-förmig nach unten ausgebuchtet sind.

5. Bausatz nach Anspruch 2, 3 oder 4, für ein Kraftfahrzeug mit hohlen B-Säulen (6) und hohlen C-Säulen (7) im Bereich der hinteren Seitenteile, dadurch gekennzeichnet, daß die Anschlußelemente der Längsrahmenteile (2) als in die hohlen B- und C-Säulen (6, 7) einschiebbare Steckzapfen (5) ausgebildet sind.

6. Bausatz nach einem oder mehreren der vorhergehenden Ansprüche, dadurch gekennzeichnet, daß der Bausatz zusätzlich ein Heckteil (8) aus glasfaserverstärktem Kunststoff aufweist und der Rahmen (1) und das Heckteil (8) miteinander verbunden sind.

7. Bausatz nach Anspruch 6, dadurch gekennzeichnet, daß der Rahmen (1) in das Heckteil (8) einlaminiert ist.

8. Bausatz nach einem oder mehreren der vorhergehenden Ansprüche, dadurch gekennzeichnet, daß der Bausatz zusätzlich ein Faltdach aufweist.

9. Bausatz nach Anspruch 8 und 6 oder 7, dadurch gekennzeichnet, daß das Faltdach an dem Heckteil (8) befestigt ist.

10. Bausatz nach Anspruch 2, 3 oder 4, dadurch gekennzeichnet, daß die Längsrahmenteile (2) und das Querrahmenteil (3) biegesteif miteinander verschweißt sind.

11. Bausatz nach Anspruch 2, 3 oder 4, dadurch gekennzeichnet, daß die Längsrahmenteile (2) und das Querrahmenteil biegesteif miteinander verschraubt sind.

Fig. 3

Fig. 1

Fig. 2

Fig. 4

Fig. 5

Fig. 6

Fig. 7